# EUROPÄISCHE PATENTSCHRIFT

(11) **EP 2 656 105 B1**
(45) Veröffentlichungstag und Bekanntmachung des Hinweises auf die Patenterteilung: **24.08.2016**
(21) Anmeldenummer: 11824258.5
(22) Anmeldetag: 16.12.2011
(51) Int. Cl.: G01S 13/86, G01S 13/92, G08G 1/017, G08G 1/054, G08G 1/042

(54) **VERFAHREN ZUR ERSTELLUNG EINES BILDDOKUMENTES, IN DEM EIN DURCH EIN RADARGERÄT ANGEMESSENES FAHRZEUG IDENTIFIZIERT WERDEN KANN UND MIT DIESEM VERFAHREN ERSTELLTES BILDDOKUMENT**
METHOD FOR GENERATING AN IMAGE DOCUMENT IN WHICH A VEHICLE MEASURED BY A RADAR DEVICE CAN BE IDENTIFIED AND IMAGE DOCUMENT GENERATED WITH THIS METHOD
PROCÉDÉ POUR ÉTABLIR UN DOCUMENT IMAGE SELON LEQUEL UN VÉHICULE MESURÉ PAR UN APPAREIL RADAR PEUT ÊTRE IDENTIFIÉ ET DOCUMENT IMAGE ÉTABLI PAR CE PROCÉDÉ

(30) Priorität: 23.12.2010 DE 102010056405
(43) Veröffentlichungstag der Anmeldung: 30.10.2013
(73) Patentinhaber: JENOPTIK Robot GmbH, 40789 Monheim (DE)
(72) Erfinder: KÜSTER, Hans-Holger, 31061 Alfeld (DE); GEBAUER, Christoph, 50937 Köln (DE); LEHNING, Michael, 31137 Hildesheim (DE); GUSE, Wolfgang, 31141 Hildesheim (DE); MEYER, Christoph, 40885 Ratingen (DE)
(74) Vertreter: Schaller, Renate
(86) Internationale Anmeldenummer: PCT/DE2011/075311
(87) Internationale Veröffentlichungsnummer: WO 2012/089206

(56) Entgegenhaltungen:
- EP-A1- 1 990 655
- WO-A1-97/37242
- DE-A1-102008 049 113
- DE-A1-102009 043 742
- US-A1- 2006 221 229
- US-A1- 2008 166 023

## Beschreibung

Verfahren zur Erstellung eines Bilddokumentes, in dem ein durch ein Radargerät angemessenes Fahrzeug identifiziert werden kann und mit diesem Verfahren erstelltes Bilddokument

Die Erfindung betrifft ein Verfahren zur Erstellung eines Bilddokumentes und ein Bilddokument, umfassend eine Bildaufnahme, in der eine Fahrbahn mit wenigstens einem Fahrzeug abgebildet ist und eine die Bildaufnahme überlagernde Abbildung einer Markierung, die aus wenigstens einer Markierungslinie besteht, mit deren Hilfe eines der abgebildeten Fahrzeuge als ein mit einem Radargerät angemessenes Fahrzeug identifiziert werden soll.
Ein Fahrzeug wird während der gesamten Durchfahrt durch die Radarstrahlung angemessen. Dabei wird aus den vom Radargerät erhaltenen Radarsignalen, die durch Reflexion an einem angemessenen Fahrzeug von der Radarantenne des Radargerätes empfangen werden, eine Vielzahl von Messwerten ermittelt, aus denen Geschwindigkeits- und Entfernungswerte abgeleitet werden können.
Das Auslösen der Kamera kann abhängig von einem abgeleiteten Geschwindigkeits- oder Entfernungswert oder auch davon unabhängig erfolgen.

Die Erstellung eines Bilddokumentes, in Abhängigkeit von einer abgeleiteten Geschwindigkeit, erfolgt zur Erfassung von Geschwindigkeitsverstößen und ist die häufigste Anwendung, weshalb es hierzu einen umfangreichen Stand der Technik gibt.
Aus zu mehreren Messzeitpunkten abgeleiteten Geschwindigkeitswerten wird eine repräsentative Geschwindigkeit bestimmt, die mit einer Höchstgeschwindigkeit verglichen wird und bei Überschreitung der Höchstgeschwindigkeit wird eine Kamera ausgelöst. Unter Messzeitpunkt soll je ein Messzyklus in Form eines Rechenalgorithmus (Sample) verstanden werden, der einen abgeleiteten Entfernungs- und gegebenenfalls einen abgeleiteten Geschwindigkeitswert zum Ergebnis hat. Die Ergebnisse der Messzyklen, die während einer Durchfahrt erfasst wurden, werden zu einer Messung zusammengefasst.

Die Erstellung eines Bilddokumentes in Abhängigkeit von einer Entfernung kann z.B. erfolgen, um das Überfahren von Haltebalken während der Rotlichtphase einer Lichtzeichenanlage oder das Befahren eines Haltstreifens zu erfassen.

Die Erstellung eines Bilddokumentes während Radarsignale empfangen werden, unabhängig von einer abgeleiteten Entfernung oder Geschwindigkeit, kann auch erfolgen, um die Position eines angemessenen Fahrzeuges innerhalb des Radarkegels zu bestimmen. Eine Anwendung hierfür könnte z.B. die Nachweisführung des Befahrens eines gesperrten Fahrstreifens sein.

Ein gattungsgemäßes Bilddokument und ein gattungsgemäßes Verfahren zur Erstellung eines solchen Bilddokumentes, bei dem die Bildaufnahme ausgelöst wird, wenn aus den Radarsignalen eine Geschwindigkeit abgeleitet wird, die eine vorgegebene Grenzgeschwindigkeit überschreitet, ist aus der DE 10 2007 022 373 A1 bekannt.

Um eine Fahrbahn mit mehreren Fahrstreifen auf Geschwindigkeitsverstöße überwachen zu können, werden insbesondere Doppler-Radarsysteme eingesetzt. Sie werden seitlich der Fahrbahn aufgestellt, so dass ihre Radarkeule die Fahrbahn unter einem vorgegebenen Winkel und in einem vorgegebenen Bereich, der durch die Randstrahlen, die üblicherweise durch einen Abfall der Sendeleistung um 3dB charakterisiert sind, überdeckt.

Von Fahrzeugen, die diesen Bereich durchfahren, wird in bekannter Weise die Geschwindigkeit erfasst, mit einer vorgegebenen Grenzgeschwindigkeit verglichen und ein elektronisches auf einem Display darstellbares und/oder gegenständliches Bilddokument erstellt, wenn die erfasste Geschwindigkeit höher als die Grenzgeschwindigkeit ist.

Ein derartiges Bilddokument umfasst in der Regel eine Bildaufnahme, die als Rohbilddatei abgespeichert ist und eine Straßenverkehrsszene mit fahrenden Fahrzeugen zeigt, sowie eine Datenleiste, die als Datendatei abgespeichert ist und die erfasste Geschwindigkeit mit weiteren zu dem Geschwindigkeitsverstoß relevanten Daten wie zum Beispiel Ort, Datum und Zeit umfasst.

Beim Einsatz von Doppler-Radarsystemen zur Verkehrsüberwachung muss einerseits sichergestellt werden, dass die gemessene Geschwindigkeit korrekt ist und andererseits muss, sofern mehrere Fahrzeuge im Bilddokument abgebildet sind, die gemessene Geschwindigkeit einem der abgebildeten Fahrzeuge zweifelsfrei zugeordnet werden können.
Dabei kommt der Sichtbarmachung eines Beweises für die korrekte Zuordnung in einem Bilddokument eine besondere Bedeutung zu, da sie sowohl bei den betroffenen Verkehrsteilnehmern als auch bei Richtern eine hohe Akzeptanz findet.

Die Erfindung betrifft im speziellen ein Bilddokument, das eine zweifelsfreie Zuordnung einer gemessenen Geschwindigkeit zu einem in einem Bilddokument abgebildeten Fahrzeug ermöglicht oder offensichtlich macht, dass eine eindeutige Zuordnung nicht gegeben ist.

Aus dem Stand der Technik sind verschiedene Bilddokumente und Verfahren zu deren Erstellung bekannt, in denen ein angemessenes Fahrzeug in einer Gruppe von Fahrzeugen identifiziert werden kann.

Da eine Unterscheidung für die Erfindung unwesentlich ist, soll zur Beschreibung des Standes der Technik und der Erfindung nachfolgend unter einem Bilddokument, bestehend aus einer Bildaufnahme, gegebenenfalls einer Datenleiste und gegebenenfalls die Bildaufnahme überlagernden Markierungslinien bzw. Abbildungen von Markierungslinien, nicht nur eine durch Ausdrucken vergegenständlichte Bilddatei, sondern auch eine elektronisch gespeicherte und auf einem Display sichtbar machbare Bilddatei verstanden werden, die aus einer Verknüpfung einer Rohbilddatei, gegebenenfalls einer Datendatei und gegebenenfalls einer Grafikdatei gebildet wird.

Entsprechend soll unter einer Bildaufnahme nachfolgend nicht nur eine durch Ausdrucken vergegenständlichte Rohbilddatei sondern auch eine elektronisch gespeicherte und/oder auf einem Display sichtbar machbare Rohbilddatei verstanden werden, die mittels einer Kamera gewonnen wird.

Die Datenleiste soll nicht nur als eine durch Ausdrucken vergegenständlichte Datendatei sondern auch als eine elektronisch gespeicherte und auf einem Display sichtbar machbare Datendatei verstanden werden, deren Dateninhalt durch verschiedene Messeinrichtungen, wie ein Radargerät und einen Zeitmesser gewonnen wird.

Eine Markierung bzw. die Abbildung einer Markierung, wozu an späterer Stelle weitere Erläuterungen gegeben werden, soll nicht nur als eine durch Ausdrucken vergegenständlichte Grafikdatei sondern auch eine elektronisch gespeicherte und auf einem Display sichtbar machbare Grafikdatei verstanden werden, die rechentechnisch auf der Basis unterschiedlicher Messwerte oder Parameter erstellt werden kann.

Ein gattungsgemäßes Bilddokument wird gemäß dem Stand der Technik gebildet, aus einer Bildaufnahme, gegebenenfalls einer Datenleiste, die einen unterschiedlichen Informationsgehalt aufweisen kann und gegebenenfalls wenigstens einer Markierungslinie bzw. deren Abbildung.

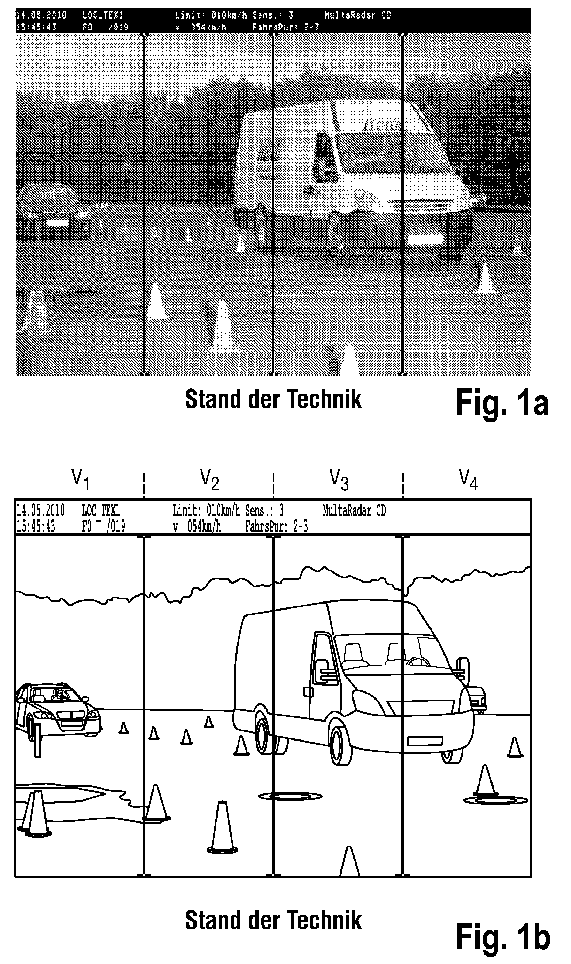

Ein aus der Praxis bekanntes Bilddokument kennen Nutzer von Verkehrsradaranlagen der Firma JENOPTIK Robot GmbH, welche mit der sogenannten SmartCamera ausgestattet sind. Eine hiermit gewonnene Bildaufnahme ist entweder bereits automatisch durch eine Markierung bestehend aus Markierungslinien überlagert oder die Markierung kann über eine mitgelieferte Software in die Bildaufnahme eingeblendet werden (s. Fig. 1). Die Markierungslinien unterteilen die Bildaufnahme in vier vertikal verlaufende, vorzugsweise gleich breite Streifen V1 - V4. In Abhängigkeit von den Messbedingungen kann die Bildaufnahme mit Hilfe der Streifen V1 bis V4 unter Anwendung von vorgegebenen Auswertevorschriften ausgewertet werden.

Bei der in Fig. 1 gezeigten Verkehrssituation wird z. B. der ankommende Verkehr von der rechten Fahrbahnseite aus erfasst. In diesem Fall sehen die Auswertevorschriften vor, dass der gemessene Geschwindigkeitswert dem Fahrzeug zuzuordnen ist, welches sich im dritten Streifen V3 der Bildaufnahme befindet.
Die Bildaufnahme darf nur dann ausgewertet werden, wenn zumindest ein Teil des Fahrzeuges in diesem dritten Streifen V3 abgebildet ist und sich darüber hinaus kein weiteres Fahrzeug der gleichen Fahrtrichtung, ganz oder teilweise, in diesem dritten Streifen V3 befindet.

Die Anwendung dieser Auswertevorschriften setzt lediglich voraus, dass die Kameraachse und die Radarachse in einer bestimmten, festen und bekannten Winkelbeziehung zueinander ausgerichtet sind und die Kamera jeweils mit einer systematischen Zeitverzögerung, die für die Messung erforderlich ist, nach Eintritt eines Fahrzeuges, wenn das Fahrzeug sich dem Radargerät annähert, oder nach Austritt, wenn das Fahrzeug sich von dem Radargerät entfernt, ausgelöst wird. Bevorzugt werden die Kameraachse und die Radarachse so zueinander ausgerichtet, dass die Kameraachse und ein Randstrahl der Radarkeule auf die Fahrbahn projiziert übereinander liegen.
Aufgrund der Auswertevorschriften, nach denen in dem dritten Streifen V3 nur ein Fahrzeug vorhanden sein darf, sind eine Vielzahl von erstellten Bilddokumenten nicht verwertbar, was abhängig vom Fahrbahnverlauf mehr oder weniger häufig der Fall sein kann. Um möglichst viele Bilddokumente auswerten zu können, kann die Verkehrsradaranlage daher nur an ausgewählten Stellen aufgestellt werden.

Um ein angemessenes Fahrzeug, das heißt eine Messung verursachendes, die Radarstrahlung reflektierendes Fahrzeug eindeutig in einer Gruppe von Fahrzeugen zu identifizieren, wird in der EP 0 935 764 B1 vorgeschlagen, gleichzeitig mit der Geschwindigkeit auch die Entfernung zu erfassen und über die erfasste Entfernung das Fahrzeug einem Fahrstreifen zuzuordnen, der dann in der Datenleiste angezeigt wird.
Zur Auswertung des Bilddokumentes wird dann geprüft, welches Fahrzeug sich auf dem in der Datenleiste angegebenen Fahrstreifen befindet. Diesem Fahrzeug, sofern es sich nur um eines handelt, wird dann die gemessene Geschwindigkeit zugeordnet. Befinden sich zwei Fahrzeuge in dem angegebenen Fahrstreifen, kann das Bilddokument nicht verwertet werden.

Bekanntermaßen kann aus Messwerten, die mit dem Doppler-Radar-Prinzip zu einem Messzeitpunkt gewonnen werden eine Geschwindigkeit sehr genau abgeleitet werden, während für die Entfernung eine Schar bzw. eine Anzahl von Entfernungswerten gewonnen werden, die einer größeren zufälligen Messabweichung unterliegen und aus denen ein für die Schar charakteristischer Entfernungswert abgeleitet wird, der mit einer Messabweichung behaftet ist. Die Punktreflexionen, die von einem Fahrzeug zur Radarantenne gelangen, erstrecken sich auf die gesamte Fahrzeugkontur, auf die der Radarstrahlquerschnitt projiziert wird. Die sich dadurch ergebende Messabweichung ist für unterschiedliche Fahrzeuge unterschiedlich groß und ändert sich auch über die Durchfahrt eines Fahrzeuges durch die Radarkeule. Das ist damit begründet, dass der auf ein durch eine Radarkeule fahrendes Fahrzeug projizierte Radarstrahlquerschnitt für unterschiedliche Fahrzeuge aufgrund der unterschiedlichen Formen und Größen der Aufbauten und gegebenenfalls vorhandenen Fracht-Ladungen unterschiedlich ist und sich dieser vom Eintritt in die Radarkeule bis hin zum Austritt aus der Radarkeule in Abhängigkeit der jeweiligen Position des Fahrzeuges verändert.

Eine eindeutige Identifikation eines Fahrzeuges in einer Gruppe von Fahrzeugen nur anhand von Entfernungswerten, die einem Fahrstreifen zugeordnet werden, ist aufgrund der Messabweichung nicht immer sicher möglich.

Deshalb können die Fahrstreifen kein sicheres Merkmal zur Identifikation eines Fahrzeuges in einer Gruppe von Fahrzeugen darstellen. Völlig ungeeignet ist ein derartiges Bilddokument, wenn auf der Fahrbahn keine sichtbare Unterteilung in einzelne Fahrstreifen vorhanden ist.

Auch in der EP 1 610 279 A1 ist ein Bilddokument beschrieben in dem ein angemessenes Fahrzeug eindeutig identifizierbar sein soll.
Es wird die Geschwindigkeit und die Entfernung aller durch eine Radarkeule fahrenden Fahrzeuge erfasst und deren Geschwindigkeit mit einer Höchstgeschwindigkeit verglichen. Bei Feststellung der Überschreitung der Höchstgeschwindigkeit wird eine fotographische Bildaufnahme vom Sichtfeld des Radargerätes erstellt. Aus den Messwerten wird anschließend ermittelt wie viele Fahrzeuge sich zum Zeitpunkt des Auslösens der Kamera in der Radarkeule befunden haben. Ist die Anzahl größer als 1 und das Messverfahren findet in einem Land statt, in dem es nicht gestattet ist, Fotos auf denen mehrere Fahrzeuge abgebildet sind als Beweis für einen Verkehrsverstoß zu verwenden, wird das Messverfahren sofort abgebrochen und die Bildaufnahme zerstört.
In einer anderen Ausführungsform hat man zuvor eine Kartographie der Fahrstreifen erstellt, die es gestattet aus einer gemessenen Entfernung, zwischen einem Fahrzeug im Sichtfeld und dem Radargerät, auf einen entsprechenden Fahrstreifen zu schließen, auf dem das Fahrzeug mit überhöhter Geschwindigkeit fährt.
Es wird vorgeschlagen dieses Fahrzeug dann im Bild hervorzuheben, indem z. B. der betreffende Fahrstreifen umrahmt wird oder die Bereiche der anderen Fahrstreifen abgedunkelt werden.
Anschließend soll zur Erstellung eines amtlichen Verstoßprotokolls, eine Datei erzeugt werden, die das so verarbeitete Bild und die Geschwindigkeit des Fahrzeuges, bei dem der Verstoß festgestellt wurde, umfasst.

In der DE 10 2007 022 373 A1 wird nun ein Verfahren vorgeschlagen, in dem unabhängig von Merkmalen der Fahrbahn oder anderen Umgebungsmerkmalen ein angemessenes Fahrzeug in einer Gruppe von Fahrzeugen identifiziert werden kann.

Zur Durchführung eines Verfahrens nach der DE 10 2007 022 373 A1 wird eine Radarstrahlung so über eine Fahrbahn gerichtet, dass gleichzeitig mehrere Fahrzeuge durch einen mittels der Radarstrahlung (Radarkeule) definierten Messbereich fahren können.

Hierzu kann ein Radargerät neben der Fahrbahn unter einem spitzen horizontalen Aufstellwinkel der Radarachse zur Fahrbahnrichtung positioniert werden.
Fahrzeuge, die nicht auf demselben Fahrstreifen fahren, d.h. die nicht eine wenigstens annähernd identische Fahrzeugspur beschreiben, durchfahren dann unterschiedliche Entfernungsbereiche. Durch die Erfassung einer Folge von Entfernungswerten, denen jeweils ein Winkelwert, welcher z. B. mittels zweier Empfangsantennen über eine Triangulationsmessung gewonnen wird, zugeordnet wird, kann die Fahrzeugspur, bestimmt durch eine Folge von Positionswerten, ermittelt werden.

Die Entfernungs- und Winkelwerte werden z. B. durch Mittelwertbildung aus einer Messwertschar von Partialreflexionen nach einer Rayleighverteilung pro Messzeitpunkt gebildet.

Sollte während der Messung eine Geschwindigkeit detektiert worden sein, die oberhalb einer vorgegebenen Grenzgeschwindigkeit liegt, ermittelt der Rechner die Fahrzeugspur des angemessenen Fahrzeuges und gibt ein Signal an eine Kamera zur Erstellung einer Bildaufnahme der aktuellen Verkehrsszene. Die Kamera ist in einem bekannten festen Abstand zum Radargerät 1 so angeordnet und eingestellt, dass die optische Achse in einer willkürlichen aber festen und bekannten Winkelbeziehung zur Radarachse ausgerichtet ist und die Verkehrsszene über einen Tiefenschärfebereich um eine vorgegebene Entfernung, die einen Fotopunkt bezeichnet, scharf abgebildet wird.

Da das Objektfeld der Kamera über alle Fahrstreifen reicht, über die auch die Radarkeule gerichtet ist, können auch mehrere Fahrzeuge in der Bildaufnahme abgebildet sein, die sich zum Zeitpunkt des Auslösens der Kamera innerhalb oder auch außerhalb der Radarkeule befinden.

Um nun das angemessene Fahrzeug in der Bildaufnahme eindeutig identifizieren zu können, wird die vom angemessenen Fahrzeug ermittelte Fahrspur, die im Sinne der Erfindung eine Markierungslinie ist in die Bildebene der Kamera transformiert bzw. abgebildet. Die Abbildung der Markierungslinie überdeckt die Bildaufnahme in den Bildpunkten, welche den Punkten im Objektfeld zugeordnet werden können, die gemeinsam die Fahrspur beschreiben.

Das heißt die Identifikation eines angemessenen Fahrzeuges erfolgt allein anhand der vom angemessenen Fahrzeug zusammen mit der Geschwindigkeit gewonnenen Positionswerte des Fahrzeuges, bestimmt durch die Entfernung und deren Winkel, bezogen auf den Standort des Radargerätes und damit der Kamera ohne absoluten Bezug auf einzelne Fahrstreifen der Fahrbahn.

Die Abbildung der Markierungslinie kann in Form von Punkten, Kreuzen, Dreiecken oder ähnlichem oder in Form einer unterbrochenen oder geschlossenen Linie bzw. eines unterbrochenen bzw. geschlossenen Streifens eingeblendet werden. Die Einblendung kann auch durch farbige Gestaltung oder durch Aufhellen bzw. Abdunkeln von Bildbereichen erfolgen, welche die abgebildete Fahrspur charakterisieren, wobei um die hierfür relevanten Bildpunkte auch ein Toleranzbereich, der durch die Messabweichung bestimmt ist, markiert sein kann. Die Auswertevorschrift lautet hier, dass das Fahrzeug in der Bildaufnahme das angemessene Fahrzeug ist, welches von der abgebildeten Fahrspur überlagert wird.

Den Stand der Technik zusammenfassend kann festgestellt werden, dass bei der EP 0 935 764 B1 und der EP 1 610 279 A1 ein angemessenes Fahrzeug über eine Zuordnung zu einem Fahrstreifen anhand der mit der Geschwindigkeit erfassten Entfernung erfolgt, wobei im Bilddokument der betreffende Fahrstreifen in einer Datenleiste angezeigt sein kann und/oder der betreffende Fahrstreifen in der Bildaufnahme durch eine Markierung überlagert sein kann.
Wie dargestellt, ist diese Zuordnung nicht in jeder Messsituation zweifelsfrei möglich. Insbesondere wenn auf der Fahrbahn keine Fahrstreifenmarkierung, über die die Fahrbahn in mehrere Fahrstreifen sichtbar unterteilt ist, vorhanden ist, ist dies gar nicht möglich.

Bei der DE 10 2007 022 373 A1 wird ein angemessenes Fahrzeug zwar unabhängig von Merkmalen der Fahrbahn oder anderen Umgebungsmerkmalen über eine die Bildaufnahme überlagernde Auswerteschablone identifiziert, jedoch ist hierzu die vielfache Erfassung von Entfernungen und zusätzliche Erfassung von Messwinkeln und damit ein deutlich höherer Rechen- und Speicheraufwand erforderlich.

Der Erfindung liegt die Aufgabe zugrunde ein Bilddokument zu schaffen, in dem ein durch ein Radargerät angemessenes Fahrzeug, unabhängig vom Vorhandensein von Fahrbahnmarkierungen als angemessenes Fahrzeug mit wenig Aufwand sicher identifiziert werden kann.
Darüber hinaus ist es die Aufgabe der Erfindung ein Verfahren zur Erstellung eines solchen Bilddokumentes und ein Verfahren zu dessen Auswertung zu schaffen.

Diese Aufgabe wird für ein Verfahren zur Erstellung eines Bilddokumentes, in dem ein durch ein Radargerät angemessenes Fahrzeug identifiziert werden kann durch folgende Verfahrensschritte gelöst. Mit einem Radargerät wird eine Radarkeule mit Randstrahlen über eine Fahrbahn gerichtet, die im Objektfeld einer Kamera liegt, wodurch Fahrzeuge welche die Radarkeule durchfahren angemessen werden. Aus den durch das Anmessen erhaltenen Messwerten werden Entfernungswerte abgeleitet und mittels der Kamera wird zu einem bestimmten Auslösezeitpunkt eine Bildaufnahme erstellt. Es wird eine Markierung bestehend aus wenigstens einer Markierungslinie unter Einbeziehung wenigstens eines abgeleiteten Entfernungswertes generiert und eine Abbildung der Markierung in der Bildebene der Kamera wird berechnet. Die Bildaufnahme und die berechnete Abbildung werden zu einem Bilddokument zusammengeführt, indem die Abbildung sichtbar über die Bildaufnahme projiziert wird, um in Abhängigkeit der Relativlage der in der Bildaufnahme abgebildeten Fahrzeuge zu der Abbildung der Markierung das angemessene Fahrzeug zu identifizieren.

Es ist erfindungswesentlich, dass entweder eine oder zwei Markierungslinien so berechnet werden, dass sie je einen auf die Fahrbahn projizierten Kreisbogen mit je einem Radius bilden und deren Mittelpunkte in den Fußpunkt des Radargerätes gelegt werden.
Es ist weiterhin erfindungswesentlich, dass aus den abgeleiteten Entfernungswerten ein repräsentativer Entfernungswert, der für die Entfernung des angemessenen Fahrzeuges zum Auslösezeitpunkt repräsentativ ist, bestimmt wird und aus dem repräsentativen Entfernungswert der Radius der einen Markierungslinie bzw. die Radien der zwei Markierungslinien abgeleitet werden.

Für eine Markierung bestehend aus nur einer Markierungslinie wird vorteilhaft aus dem repräsentativen Entfernungswert unter Vorgabe einer Messabweichung ein unterer Entfernungsgrenzwert errechnet, der als Wert für einen inneren Radius zur Berechnung einer inneren Markierungslinie, die eine erste Markierungslinie darstellt, verwendet wird, womit die Abbildung der Markierung die Bildaufnahme in einen vorderen Bildbereich und einen hinteren Bildbereich unterteilt und ein Fahrzeug als angemessenes Fahrzeug identifiziert wird, wenn es allein vollständig im hinteren Bildbereich abgebildet ist.

Für eine Markierung die auch eine zweite Markierungslinie aufweist, wird aus dem repräsentativen Entfernungswert unter Vorgabe der Messabweichung auch ein oberer Entfernungsgrenzwert errechnet, der als Wert für einen äußeren Radius zur Berechnung einer äußeren Markierungslinie, die eine zweite Markierungslinie darstellt, verwendet wird, womit die Abbildung der Markierung die Bildaufnahme in einen vorderen Bildbereich, einen mittleren Bildbereich und einen hinteren Bildbereich unterteilt und ein Fahrzeug als angemessenes Fahrzeug identifiziert wird, welches allein wenigstens mit seiner Fahrzeugfront im mittleren Bildbereich abgebildet ist.

Um den Bildbereich weiter einzuschränken, indem ein Fahrzeug als das angemessene Fahrzeug identifiziert werden kann, wird bei einer Markierung, nur aus einer inneren Markierungslinie bestehend, diese durch die Randstrahlen begrenzt, womit der hintere Bildbereich seitlich, auf einen Bereich der abgebildeten Fahrbahn über den die Radarkeule gerichtet ist, begrenzt wird.

Ebenso kann der Bildbereich eingeschränkt werden, indem ein Fahrzeug als das angemessene Fahrzeug identifiziert wird, wenn eine Markierung, aus einer inneren und einer äußeren Markierungslinie besteht, indem diese durch die Randstrahlen begrenzt werden, womit der mittlere Bildbereich seitlich, auf einen Bereich der abgebildeten Fahrbahn über den die Radarkeule gerichtet ist, begrenzt wird.

Vorteilhaft können die Bildbereiche hervorgehoben werden, indem sich das angemessene Fahrzeug nicht befinden kann, welcher bei einer Markierung mit nur einer Markierungslinie der vordere Bildbereich und bei einer Markierung mit zwei Markierungslinien die an den mittleren Bildbereich angrenzenden Bildbereiche sind.

Ein Hervorheben kann z. B. durch Aufhellen oder bevorzugt durch Abdunkeln erfolgen.

Neben den Entfernungswerten kann aus den Messwerten auch ein bestätigter Geschwindigkeitswert abgeleitet werden, der mit einem vorgegebenen Höchstgeschwindigkeitswert verglichen wird und bei dessen Überschreitung der bestimmte Auslösezeitpunkt erreicht wird.

Für ein Bilddokument, in dem ein durch ein Radargerät angemessenes, auf einer Fahrbahn fahrendes Fahrzeug identifiziert werden kann, wird die Aufgabe der Erfindung gelöst indem es nach einem erfindungsgemäßen Verfahren erstellt wird und eine Bildaufnahme und einer die Bildaufnahme überlagernden Abbildung einer Markierung umfasst, bestehend aus wenigstens einer Markierungslinie, die einen auf die Fahrbahn projizierten Kreisbogen darstellt.

Vorteilhaft ist die Markierung bestehend aus nur einer inneren Markierungslinie, die einen auf die Fahrbahn projizierten Kreisbogen darstellt, sodass die Abbildung der Markierung die Bildaufnahme in einen vorderen Bildbereich und einen hinteren Bildbereich unterteilt.

Die Markierung kann vorteilhaft auch aus einer inneren Markierungslinie und einer äußeren Markierungslinie bestehen, die jeweils einen auf die Fahrbahn projizierten Kreisbogen darstellen, deren Mittelpunkte zusammenfallen, sodass die Abbildung die Bildaufnahme in einen vorderen Bildbereich, einen mittleren Bildbereich und einen hinteren Bildbereich unterteilt.

Insbesondere wenn das Bilddokument zur Ahndung von Geschwindigkeitsverstößen verwendet werden soll, umfasst es vorteilhaft eine Datenleiste, in der für die Auswertung und Verwendung des Bilddokumentes relevante Daten dargestellt sind.

Zur Vermeidung der Überdeckung eines abgebildeten Fahrzeuges durch die Abbildung der Markierung ist diese vorteilhaft ausgespart, wo sie auf einem abgebildeten Fahrzeug liegt.

Für ein Verfahren zur Auswertung eines erfindungsgemäßen Bilddokumentes mit der Abbildung einer Markierung mit nur einer Markierungslinie wird die Aufgabe dadurch gelöst, dass ein in der Bildaufnahme abgebildetes Fahrzeug dann als ein angemessenes Fahrzeug identifiziert wird, wenn es allein vollständig im hinteren Bildbereich abgebildet ist.

Für ein Verfahren zur Auswertung eines erfindungsgemäßen Bilddokumentes mit der Abbildung einer Markierung mit zwei Markierungslinien wird die Aufgabe dadurch gelöst, dass ein in der Bildaufnahme (1) abgebildetes Fahrzeug dann als ein angemessenes Fahrzeug (6) identifiziert wird, wenn es allein wenigstens mit seiner Fahrzeugfront im mittleren Bildbereich (1.2) abgebildet ist.

Die Erfindung soll nachfolgend anhand von Ausführungsbeispielen, unterstützt durch Zeichnungen, erläutert werden.

In den Zeichnungen zeigen:
- Fig. 1a: Kopie eines aus dem Stand der Technik bekannten Bilddokumentes
- Fig. 1b: Strichzeichnung eines Bilddokumentes gemäß Fig. 1a
- Fig. 2: Prinzipskizze eines Objektfeldes in Draufsicht zur Erläuterung der Ausführung einer einzelnen, errechneten Markierungslinie
- Fig. 3: Prinzipskizze eines Objektfeldes in Draufsicht zur Erläuterung der Ausführung einer inneren und einer äußeren errechneten Markierungslinie
- Fig. 4a: Kopie einer ersten Ausführung eines Bilddokumentes nach der in Fig. 2 dargestellten Prinzipskizze
- Fig. 4b: Strichdarstellung eines Bilddokumentes nach Fig. 4a
- Fig. 5a: Kopie einer zweiten Ausführung eines Bilddokumentes nach der in Fig. 3 dargestellten Prinzipskizze
- Fig. 5b: Strichdarstellung eines Bilddokumentes nach Fig. 5a
- Fig. 6a: Kopie einer dritten Ausführung eines Bilddokumentes nach der in Fig. 3 dargestellten Prinzipskizze
- Fig. 6b: Strichdarstellung eines Bilddokumentes nach Fig. 6a

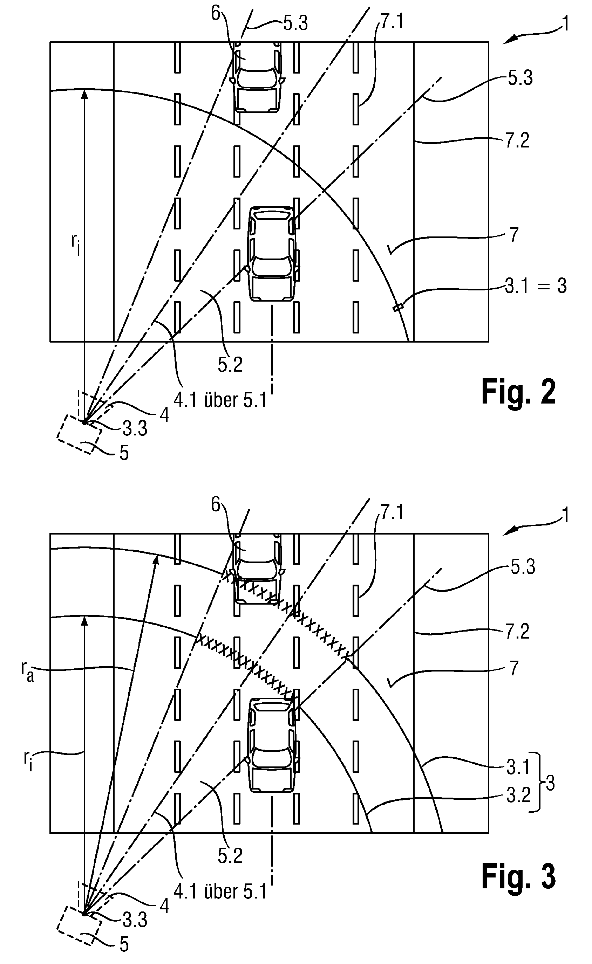

Ein erfindungsgemäßes Bilddokument umfasst in allen Ausführungen zwingend eine Bildaufnahme 1, wenigstens eine Abbildung 3' einer Markierung 3 sowie optional eine Datenleiste 2.

Die Datenleiste 2 kann Zusatzinformationen umfassen, die eine Verwendung des Bilddokumentes zur Auswertung und Verwertung, z. B. zur Ahndung von Verkehrsverstößen ermöglicht, sie ist jedoch nicht zwingend erforderlich, um ein angemessenes Fahrzeug 6 in der Bildaufnahme 1 identifizieren zu können.

Zur Erstellung eines Bilddokumentes wird ein Radargerät 5 neben einer Fahrbahn 7 mit mehreren Fahrstreifen, welche durch Fahrbahnmarkierungen 7.1 sichtbar voneinander getrennt sein können, jedoch nicht müssen, aufgestellt, sodass es entlang einer Radarachse 5.1 eine Radarkeule 5.2, mit Randstrahlen 5.3 über die Fahrbahn 7 richten kann.

Durchfährt ein Fahrzeug die Radarkeule 5.2 werden an dem Fahrzeug Radarstrahlen reflektiert und das Radargerät 5, genauer dessen Radarantenne, empfängt Radarsignale aus denen, wie im Stand der Technik erläutert wurde, über die Dauer der Durchfahrt pro Messzeitpunkt eine Vielzahl von Messwerten gewonnen werden, aus denen jeweils ein Entfernungswert abgeleitet wird. Diese abgeleiteten Entfernungswerte haben eine Messabweichung, die im wesentlichen bestimmt ist durch die Streuung der Messwerte die zu einem Messzeitpunkt erfasst werden.
Die abgeleiteten Entfernungswerte werden je nach gemessener Verkehrsrichtung tendenziell kleiner, wenn sich das Fahrzeug dem Radargerät 5 annähert, oder größer, wenn sich das Fahrzeug von dem Radargerät entfernt. Aus den abgeleiteten Entfernungswerten, wobei bevorzugt nur die in einem mittleren Zeitfenster abgeleiteten Entfernungswerte verwendet werden, wird ein repräsentativer Entfernungswert bestimmt, der für die Entfernung des angemessenen Fahrzeuges von der Kamera 4 zum Auslösezeitpunkt repräsentativ ist.
Der repräsentative Entfernungswert kann einem Entfernungswert dieser reduzierten Anzahl von abgeleiteten Entfernungswerten entsprechen oder aber ein aus diesen errechneten Entfernungswert sein.
Dem repräsentativen Entfernungswert wird eine vorgegebene Messabweichung zugeordnet, mit einem kleinsten Entfernungswert als unteren Entfernungsgrenzwert und einem größten Entfernungswert als oberen Entfernungsgrenzwert.
Die vorgegebene Messabweichung ist bevorzugt gleich der geringsten tatsächlichen Messabweichung eines der abgeleiteten Entfernungswerte.
Es wird davon ausgegangen, dass die tatsächliche Entfernung des angemessenen Fahrzeuges 6 zum Zeitpunkt des Auslösens der Kamera innerhalb des durch die beiden Entfernungsgrenzwerte begrenzten Entfernungsbereiches liegt.

Zu einem bestimmten Auslösezeitpunkt wird eine Kamera 4 ausgelöst und eine Bildaufnahme 1 erstellt. Dieser liegt für den ankommenden Verkehr vorteilhaft beim Einfahren des Fahrzeuges in den Radarkegel und beim abfließenden Verkehr beim Verlassen des Radarkegels.

Das eigentliche Auslösen der Kamera 4 kann davon abhängig sein, ob zuvor aus den Radarsignalen eine Geschwindigkeit abgeleitet wurde, die größer als eine vorgegebene Höchstgeschwindigkeit ist.
Das Auslösen der Kamera 4 kann auch unabhängig von Werten, die aus den Radarsignalen abgeleitet werden, erfolgen, z. B. wenn durch ein anderes Messmittel das Befahren des Standstreifens detektiert wird. Die Identifikation eines angemessenen Fahrzeuges 6 mit einer hierzu repräsentativen Entfernung kann dann als zusätzlicher Beweis verwendet werden.

Die Kamera 4 muss so zur Fahrbahn 7 ausgerichtet sein, dass sich zum Zeitpunkt des Auslösens der Kamera 4 ein angemessenes Fahrzeug 6, unabhängig davon wo es auf der Fahrbahn 7 gerade fährt, im Objektfeld der Kamera 4 befindet, um in der Bildaufnahme 1 abgebildet zu werden.
Dabei muss die Kameraachse 4.1 der Kamera 4 zur Radarachse 5.1, welche die Referenzachse der Radarkeule 5.2 darstellt, in keinem vorgegebenen Winkelverhältnis ausgerichtet sein, sondern deren Relativlage, insbesondere deren Winkelverhältnis muss lediglich für den Zeitraum der Messung bekannt sein, um in Kenntnis deren Relativlage, dem Abbildungsmaßstab und der Verzeichnung der Kamera 4 die Markierung 3, die mit Hilfe des repräsentativen Entfernungswertes des Fahrzeuges errechnet wird, in eine in der Bildebene der Kamera 4 liegende Abbildung umrechnen zu können. Nur zum einfachen Verständnis der Erfindung sollen gemäß den einzelnen später beschriebenen Ausführungen die Kameraachse 4.1 und die Radarachse 5.1 in einer vertikalen Ebene liegen.

Die optionale Datenleiste 2 ist in der Regel oberhalb der Bildaufnahme 1 angeordnet und kann neben einer gemessenen Geschwindigkeit weitere zum Verkehrsverstoß relevante Daten, wie eine vorgegebene Höchstgeschwindigkeit, das Datum, die Uhrzeit, den Ort und den repräsentativen Entfernungswert enthalten.

Die Markierung 3 besteht entweder nur aus einer Markierungslinie die als innere Markierungslinie 3.1 bezeichnet werden soll oder aus zwei Markierungslinien, die dann die innere Markierungslinie 3.1 und eine äußere Markierungslinie 3.2 sind.

Die Markierungslinien sind Kreisbögen mit einem unterschiedlichen Radius und mit einem gemeinsamen Kreismittelpunkt. Ganz genau genommen sind die Kreisbögen Abschnitte von Kreislinien, die einen unterschiedlichen Radius und einen gemeinsamen Mittelpunkt 3.3 aufweisen.
Die Markierungslinien werden mit Hilfe des repräsentativen Entfernungswertes rechnerisch generiert.
Aus dem repräsentativen Entfernungswert wird aus der vorgegebenen Messabweichung ein unterer Entfernungsgrenzwert errechnet, der als Wert für den Radius rᵢ der inneren Markierungslinie 3.1 dient und gegebenenfalls für die äußere Markierungslinie 3.2 ein oberer Entfernungsgrenzwert errechnet, der als Wert für den Radius rₐ der äußeren Markierungslinie 3.2 dient. Der Mittelpunkt 3.3 wird in den Fußpunkt des Radargerätes 5 gelegt.
Ein Kreisbogen beschreibt eine Linie gebildet von Punkten im Objektfeld die eine gleiche Entfernung zum Mittelpunkt 3.3 und damit zum Radargerät 5 aufweisen.

In Fig. 2 ist eine Prinzipskizze eines Objektfeldes in Draufsicht dargestellt mit einer auf die Fahrbahn 7 projizierten Markierung 3 bestehend aus nur einer, der inneren Markierungslinie 3.1.

Fig. 3 unterscheidet sich hierzu dadurch, dass die Markierung 3 aus zwei auf die Fahrbahn 7 projizierte Markierungslinien, die innere Markierungslinie 3.1 und eine äußere Markierungslinie 3.2 besteht.

Die Fahrbahn 7 ist jeweils durch zwei Fahrbahnränder 7.2 begrenzt und durch Fahrbahnmarkierungen 7.1 in fünf Fahrstreifen unterteilt. Zwei Fahrzeuge befinden sich im Objektfeld, beide wenigstens teilweise innerhalb der Radarkeule 5.2., die vom Radargerät 5 ausgeht und durch Randstrahlen 5.3 begrenzt ist.
Wie an späterer Stelle anhand der Auswertevorschriften der unterschiedlich ausgeführten Bilddokumente näher erläutert wird, ist insbesondere eine Ausführung eines Bilddokumentes mit einer inneren und einer äußeren Markierungslinie 3.1, 3.2 vorteilhaft, da die Wahrscheinlichkeit, dass das Bilddokument mangels Eindeutigkeit nicht ausgewertet werden kann, im Vergleich zu einem Bilddokument mit nur einer inneren Markierungslinie 3.1, geringer ist.

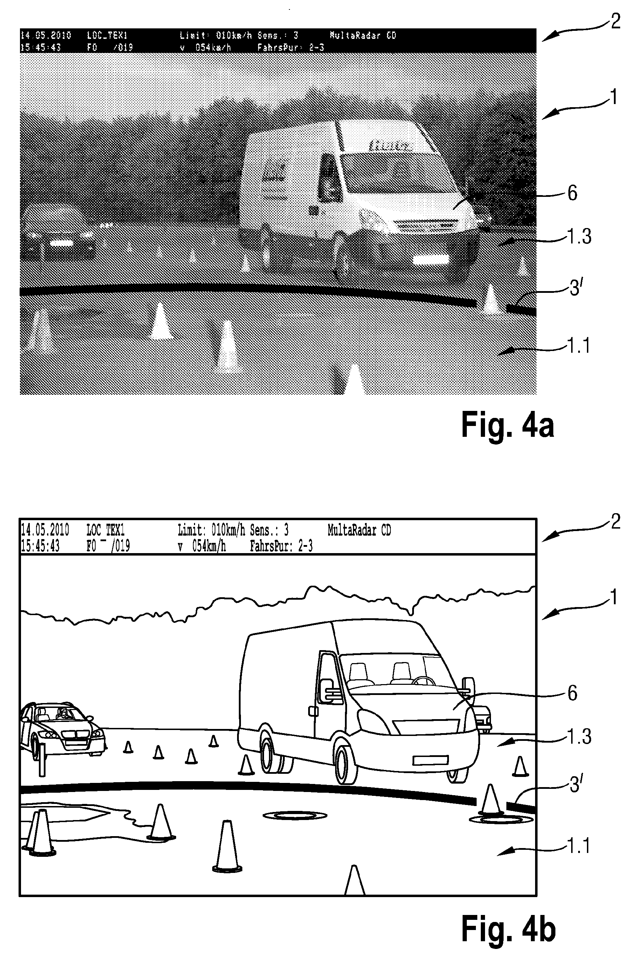

Eine erste konkrete Ausführungsform eines Bilddokumentes basierend auf dem Prinzip gemäß Fig. 2 ist in den Fig.4 dargestellt.
Mit der Abbildung 3.1' nur einer inneren Markierungslinie 3.1 wird die Bildaufnahme 1 in einen vorderen Bildbereich 1.1 und einen hinteren Bildbereich 1.3 unterteilt.
Da die innere Markierungslinie 3.1 mit einem Radius gleich dem unteren Entfernungsgrenzwert berechnet wurde, kann das angemessene Fahrzeug 6 nur im hinteren Bildbereich 1.3 abgebildet sein. Im vorliegenden Fall sind allerdings zwei Fahrzeuge im hinteren Bildbereich 1.3 abgebildet. Zwar ist der Abstand des hier abgebildeten PKW zur Markierungslinie deutlich größer als der Abstand des abgebildeten Lieferfahrzeuges und die Differenz scheint größer zu sein als eine größt mögliche Messabweichung von abgeleiteten Entfernungswerten, aber gesichert ist diese Annahme nicht, weshalb das angemessene Fahrzeug 6 nicht sicher identifiziert werden kann und das Bilddokument nicht auswertbar ist.

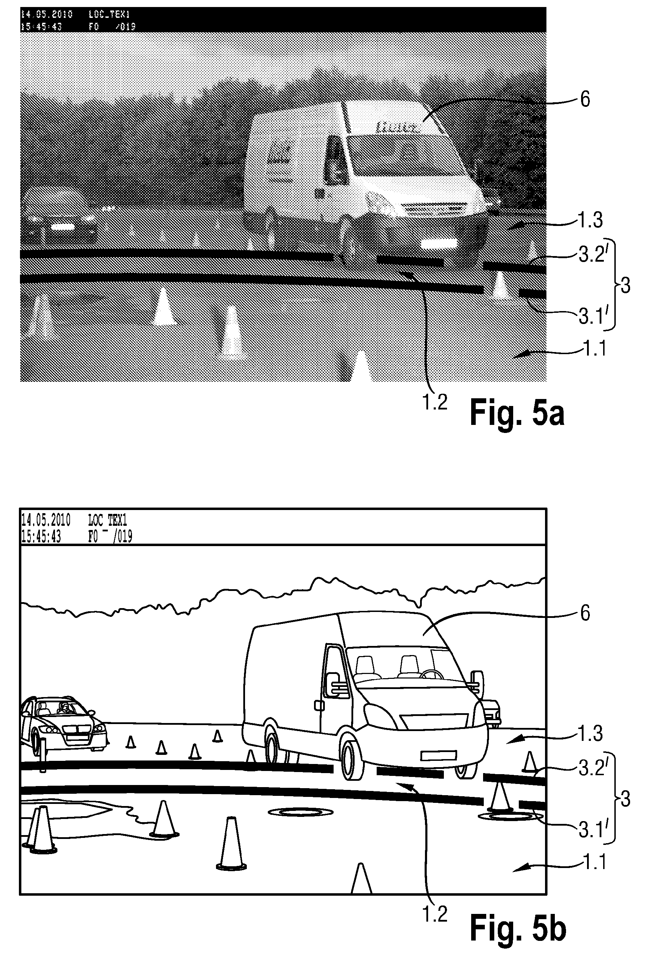

Die gleiche Verkehrssituation ist in Fig. 5 gezeigt, in der eine konkrete zweite Ausführungsform eines Bilddokumentes basierend auf dem Prinzip gemäß Fig. 3 dargestellt ist.
Durch die Abbildung 3.1' einer inneren Markierungslinie 3.1 und die Abbildung 3.2'einer äußeren Markierungslinie 3.2 wird die Bildaufnahme 1 in einen vorderen Bildbereich 1.1, einen mittleren Bildbereich 1.2 und einen hinteren Bildbereich 1.3 unterteilt.
Da die innere Markierungslinie 3.1 mit dem untersten Entfernungsgrenzwert und die äußere Markierungslinie 3.2 mit dem obersten Entfernungsgrenzwert errechnet wurde, kann das angemessene Fahrzeug 6 nur im mittleren Bildbereich 1.2 abgebildet sein.
Allein der abgebildete Lieferwagen befindet sich mit seiner Fahrzeugfront in dem mittleren Bildbereich 1.2 weshalb dieser zweifelsfrei als das angemessene Fahrzeug 6 identifiziert werden kann.

Auch dieses Bilddokument wäre nicht auswertbar, wenn der abgebildete PKW mit einem geringeren Abstand zum Lieferwagen fahren würde und ebenfalls teilweise innerhalb des inneren Bildbereiches abgebildet wäre.

Es wird eine weitere Verbesserung erreicht, wenn die Abbildung 3' der Markierung 3 nicht wie in der zweiten Ausführung des Bilddokumentes durch die Ränder der Bildaufnahme 1, sondern durch die Randstrahlen 5.3 begrenzt werden, wie sie in Fig. 3, durch Kreuze überlagert, hervorgehoben sind.

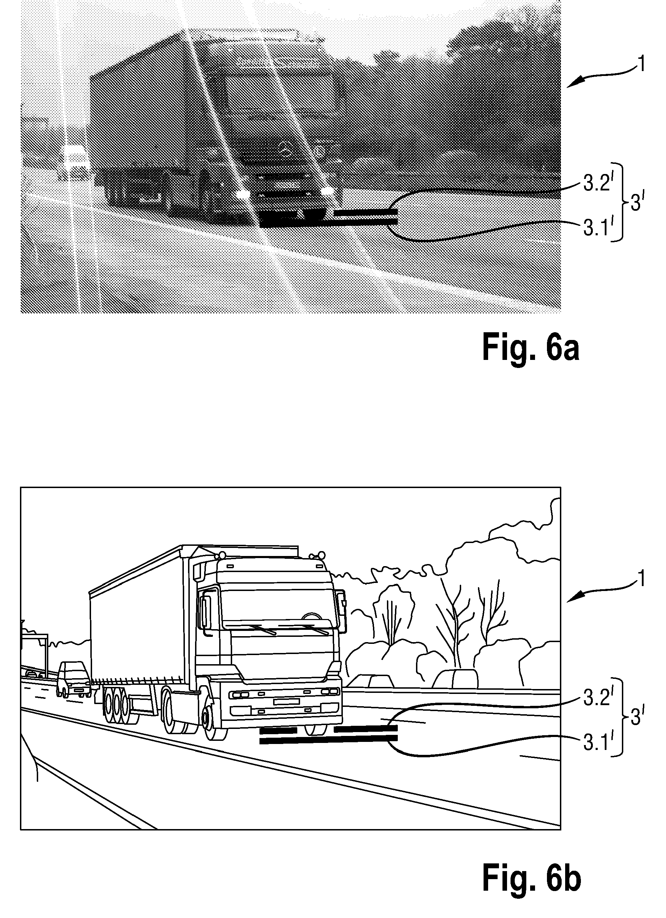

In der Fig. 6 ist eine dritte Ausführung eines Bilddokumentes gezeigt, in dem derartige Abbildungen 3.1', 3.2' der inneren und äußeren Markierungslinie 3.1, 3.2 gezeigt sind.

Die Abbildungen 3.1', 3.2' der Markierungslinien 3.1, 3.2 sind in den betreffenden Fig. als schwarze Linien dargestellt. Praktisch können sie jedoch insbesondere durch eine auffallende Farbgebung dargestellt sein.

Vorteilhaft können die Abbildungen 3.1', 3.2' wie in Fig. 6 anhand der äußeren Markierungslinie 3.2 gezeigt, nur dort eingeblendet sein, wo sie auf der Fahrbahn 7 liegen, d.h. sie sind nicht eingeblendet, wo sie ein Fahrzeug überdecken würden.

Auch können die Bereiche, in denen das angemessene Fahrzeug 6 nicht abgebildet sein kann, hervorgehoben sein, z. B. indem sie abgedunkelt oder aufgehellt werden.

### Bezugszeichenliste

- 1: Bildaufnahme
- 1.1: vorderer Bildbereich
- 1.2: mittlerer Bildbereich
- 1.3: hinterer Bildbereich
- 2: Datenleiste
- 3: Markierung
- 3.1: innere Markierungslinie
- 3.2: äußere Markierungslinie
- 3.3: Mittelpunkt der Markierungslinien
- 3': Abbildung der Markierung 3
- 3.1': Abbildung der inneren Markierungslinie 3.1
- 3.2': Abbildung der äußeren Markierungslinie 3.2
- 4: Kamera
- 4.1: Kameraachse
- 5: Radargerät
- 5.1: Radarachse
- 5.2: Radarkeule
- 5.3: Randstrahl der Radarkeule
- 6: angemessenes Fahrzeug
- 7: Fahrbahn
- 7.1: Fahrbahnmarkierung
- 7.2: Fahrbahnrand

- rᵢ: Radius der inneren Markierungslinie 3.1
- rₐ: Radius der äußeren Markierungslinie 3.2

## Patentansprüche

1. Verfahren zur Erstellung eines Bilddokumentes, in dem ein durch ein Radargerät (5) angemessenes Fahrzeug (6) identifiziert werden kann,
bei dem mit einem Radargerät (5) eine Radarkeule (5.2) mit Randstrahlen (5.3) über eine Fahrbahn (7) gerichtet wird, die im Objektfeld einer Kamera (4) liegt, wodurch Fahrzeuge welche die Radarkeule (5.2) durchfahren angemessen werden,
aus den durch das Anmessen erhaltenen Messwerten Entfernungswerte abgeleitet werden,
mittels der Kamera (4) zu einem bestimmten Auslösezeitpunkt eine Bildaufnahme (1) erstellt wird,
eine Markierung (3) bestehend aus wenigstens einer Markierungslinie (3.1, 3.2) unter Einbeziehung wenigstens eines abgeleiteten Entfernungswertes generiert wird,
eine Abbildung (3') der Markierung (3) in der Bildebene der Kamera (4) berechnet wird und
die Bildaufnahme (1) und die berechnete Abbildung (3') zu einem Bilddokument zusammengeführt werden, indem die Abbildung (3') sichtbar über die Bildaufnahme (1) projiziert wird, um in Abhängigkeit der Relativlage der in der Bildaufnahme (1) abgebildeten Fahrzeuge zu der Abbildung (3') das angemessene Fahrzeug (6) zu identifizieren, **dadurch gekennzeichnet,**
**dass** die wenigstens eine Markierungslinie (3.1, 3.2) berechnet wird, sodass sie einen auf die Fahrbahn (7) projizierten Kreisbogen mit einem Radius (rᵢ, rₐ) bildet, dessen Mittelpunkt (3.3) in den Fußpunkt des Radargerätes (5) gelegt wird, wobei
aus den abgeleiteten Entfernungswerten ein repräsentativer Entfernungswert, der für die Entfernung des angemessenen Fahrzeuges (6) zum Auslösezeitpunkt repräsentativ ist, bestimmt wird und
aus dem repräsentativen Entfernungswert der Radius (rᵢ, rₐ) abgeleitet wird.

2. Verfahren nach Anspruch 1, **dadurch gekennzeichnet,**
**dass** aus dem repräsentativen Entfernungswert unter Vorgabe einer Messabweichung ein unterer Entfernungsgrenzwert errechnet wird, der als Wert für einen inneren Radius (rᵢ) zur Berechnung einer inneren Markierungslinie (3.1), die eine erste Markierungslinie darstellt, verwendet wird, womit die Abbildung (3') der Markierung (3) die Bildaufnahme (1) in einen vorderen Bildbereich (1.1) und einen hinteren Bildbereich (1.3) unterteilt und ein Fahrzeug als angemessenes Fahrzeug (6) identifiziert wird, wenn es allein vollständig im hinteren Bildbereich (1.3) abgebildet ist.

3. Verfahren nach Anspruch 2, **dadurch gekennzeichnet,**
**dass** aus dem repräsentativen Entfernungswert unter Vorgabe einer Messabweichung ein oberer Entfernungsgrenzwert errechnet wird, der als Wert für einen äußeren Radius (rₐ) zur Berechnung einer äußeren Markierungslinie (3.2), die eine zweite Markierungslinie darstellt, verwendet wird, womit die Abbildung (3') der Markierung (3) die Bildaufnahme (1) in einen vorderen Bildbereich (1.1), einen mittleren Bildbereich (1.2) und einen hinteren Bildbereich (1.3) unterteilt und ein Fahrzeug als angemessenes Fahrzeug (6) identifiziert wird, welches allein wenigstens mit seiner Fahrzeugfront im mittleren Bildbereich (1.2) abgebildet ist.

4. Verfahren nach Anspruch 2, **dadurch gekennzeichnet,**
**dass** die Randstrahlen (5.3) die innere Markierungslinie (3.1) begrenzen, womit der hintere Bildbereich (1.3) seitlich, auf einen Bereich der abgebildeten Fahrbahn (7) über den die Radarkeule 5.2 gerichtet ist, begrenzt wird.

5. Verfahren nach Anspruch 3, **dadurch gekennzeichnet,**
**dass** die Randstrahlen (5.3) die innere und die äußere Markierungslinie (3.1, 3.2) begrenzen, womit der mittlere Bildbereich (1.2) seitlich, auf einen Bereich der abgebildeten Fahrbahn (7) über den die Radarkeule 5.2 gerichtet ist, begrenzt wird.

6. Verfahren nach Anspruch 2 oder 4, **dadurch gekennzeichnet,**
**dass** der vordere Bildbereich (1.1) hervorgehoben wird.

7. Verfahren nach Anspruch 3 oder 5, **dadurch gekennzeichnet,**
**dass** die an den mittleren Bildbereich (1.2) angrenzenden Bildbereiche hervorgehoben werden.

8. Verfahren nach Anspruch 1, **dadurch gekennzeichnet,**
**dass** aus den Messwerten auch ein bestätigter Geschwindigkeitswert abgeleitet wird, der mit einem vorgegebenen Höchstgeschwindigkeitswert verglichen wird und bei dessen Überschreitung der bestimmte Auslösezeitpunkt erreicht wird.

9. Bilddokument, in dem ein durch ein Radargerät (5) angemessenes, auf einer Fahrbahn (7) fahrendes Fahrzeug (6) identifiziert werden kann, erstellt nach einem Verfahren gemäß einem der Ansprüche 1 bis 8, mit einer Bildaufnahme (1) und einer die Bildaufnahme (1) überlagernden Abbildung (3') einer Markierung (3), bestehend aus wenigstens einer Markierungslinie (3.1, 3.2), die einen auf die Fahrbahn (7) projizierten Kreisbogen darstellt.

10. Bilddokument nach Anspruch 9, **dadurch gekennzeichnet,**
**dass** die Markierung (3) eine innere Markierungslinie (3.1) ist, die einen auf die Fahrbahn (7) projizierten Kreisbogen darstellt, sodass die Abbildung (3') der Markierung (3) die Bildaufnahme (1) in einen vorderen Bildbereich (1.1) und einen hinteren Bildbereich (1.3) unterteilt.

11. Bilddokument nach Anspruch 9, **dadurch gekennzeichnet,**
**dass** die Markierung (3) eine innere Markierungslinie (3.1) und eine äußere Markierungslinie (3.2) ist, die jeweils einen auf die Fahrbahn (7) projizierten Kreisbogen darstellen, deren Mittelpunkte (3.3) zusammenfallen, sodass die Abbildung (3') der Markierung (3) die Bildaufnahme (1) in einen vorderen Bildbereich (1.1), einen mittleren Bildbereich (1.2) und einen hinteren Bildbereich (1.3) unterteilt.

12. Bilddokument nach Anspruch 9, **dadurch gekennzeichnet,**
**dass** das Bilddokument eine Datenleiste (2) umfasst, in der für die Auswertung und Verwendung des Bilddokumentes relevante Daten dargestellt sind.

13. Bilddokument nach Anspruch 9, **dadurch gekennzeichnet,**
**dass** zur Vermeidung der Überdeckung eines abgebildeten Fahrzeuges durch die Abbildungen (3') der Markierung (3) diese ausgespart ist, wo sie auf einem abgebildeten Fahrzeug liegt.

14. Verfahren zur Auswertung eines Bilddokumentes gemäß Anspruch 10,
**dadurch gekennzeichnet,**
**dass** ein in der Bildaufnahme (1) abgebildetes Fahrzeug dann als ein angemessenes Fahrzeug (6) identifiziert wird, wenn es allein vollständig im hinteren Bildbereich (1.3) abgebildet ist.

15. Verfahren zur Auswertung eines Bilddokumentes gemäß Anspruch 11,
**dadurch gekennzeichnet,**
**dass** ein in der Bildaufnahme (1) abgebildetes Fahrzeug dann als ein angemessenes Fahrzeug (6) identifiziert wird, wenn es allein wenigstens mit seiner Fahrzeugfront im mittleren Bildbereich (1.2) abgebildet ist.

## Claims

1. Method for generating an image document in which a vehicle (6) measured by a radar device (5) can be identified,
in which method a radar lobe (5.2) with marginal rays (5.3) is directed across a carriageway (7) by means of a radar device (5), the carriageway (7) being located in the object field of a camera (4), whereby vehicles passing through the radar lobe (5.2) are measured,
distance values are derived from the measurement values obtained by the measurement,
an image recording (1) is generated by means of the camera (4) at a specific trigger time,
a marking (3) comprising at least one marking line (3.1, 3.2) is generated by including at least one derived distance value,
a representation (3') of the marking (3) in the image plane of the camera (4) is calculated and
the image recording (1) and the calculated representation (3') are combined to form an image document by projecting the representation (3') onto the image recording (1) in a visible manner, in order to identify the measured vehicle (6) depending on the relative position of the vehicles represented in the image recording (1) with respect to the representation (3'), **characterized in that**
the at least one marking line (3.1, 3.2) is calculated so that it forms an arc, with a radius (rᵢ, rₐ), projected onto the carriageway (7), the centre point (3.3) of said arc being positioned in the base point of the radar device (5), wherein
a representative distance value is determined from the derived distance values, said representative distance value being representative of the distance of the measured vehicle (6) at the trigger time, and
the radius (rᵢ, rₐ) is derived from the representative distance value.

2. Method according to claim 1, **characterized in that** a lower distance limit value is calculated from the representative distance value by presetting a measurement deviation, which lower distance limit value is used as value for an inner radius (rᵢ) for calculating an inner marking line (3.1), being a first marking line, with the result that the representation (3') of the marking (3) divides the image recording (1) into a front image area (1.1) and a back image area (1.3) and a vehicle is identified as measured vehicle (6) if it is represented individually and completely in the back image area (1.3).

3. Method according to claim 2, **characterized in that** an upper distance limit value is calculated from the representative distance value by presetting a measurement deviation, which upper distance limit value is used as value for an outer radius (rₐ) for calculating an outer marking line (3.2), being a second marking line, with the result that the representation (3') of the marking (3) divides the image recording (1) into a front image area (1.1), a central image area (1.2) and a back image area (1.3) and a vehicle is identified as measured vehicle (6) which is represented individually at least with its vehicle front in the central image area (1.2).

4. Method according to claim 2, **characterized in that** the marginal rays (5.3) limit the inner marking line (3.1), with the result that the back image area (1.3) is delimited laterally to an area of the represented carriageway (7) across which the radar lobe (5.2) is directed.

5. Method according to claim 3, **characterized in that** the marginal rays (5.3) limit the inner and the outer marking line (3.1, 3.2), with the result that the central image area (1.2) is delimited laterally to an area of the represented carriageway (7) across which the radar lobe (5.2) is directed.

6. Method according to claim 2 or 4, **characterized in that** the front image area (1.1) is highlighted.

7. Method according to claim 3 or 5, **characterized in that** die image areas adjoining the central image area (1.2) are highlighted.

8. Method according to claim 1, **characterized in that** a confirmed speed value is also derived from the measurement values, which confirmed speed value is compared to a predetermined maximum speed value, and the specific trigger time is reached when the maximum speed value is exceeded.

9. Image document in which a vehicle (6) measured by a radar device (5) and travelling on a carriageway (7) can be identified, the image document being generated by a method according to one of claims 1 to 8, with an image recording (1) and a representation (3') of a marking (3) superimposing the image recording (1), the marking (3) comprising at least one marking line (3.1, 3.2) forming an arc projected onto the carriageway (7).

10. Image document according to claim 9, **characterized in that** the marking (3) is an inner marking line (3.1) forming an arc projected onto the carriageway (7) so that the representation (3') of the marking (3) divides the image recording (1) into a front image area (1.1) and a back image area (1.3).

11. Image document according to claim 9, **characterized in that** the marking (3) is an inner marking line (3.1) and an outer marking line (3.2), each forming an arc projected onto the carriageway (7), the centre points (3.3) of the arcs coinciding, so that the representation (3') of the marking (3) divides the image recording (1) into a front image area (1.1), a central image area (1.2) and a back image area (1.3).

12. Image document according to claim 9, **characterized in that** the image document comprises a data bar (2) in which relevant data for the evaluation and use of the image document is displayed.

13. Image document according to claim 9, **characterized in that** the marking (3) is omitted where it is located on a represented vehicle, in order to avoid that a represented vehicle is covered by the representations (3') of the marking (3).

14. Method for evaluating an image document according to claim 10, **characterized in that** a vehicle represented in the image recording (1) is identified as a measured vehicle (6) if it is represented individually and completely in the back image area (1.3).

15. Method for evaluating an image document according to claim 11, **characterized in that** a vehicle represented in the image recording (1) is identified as a measured vehicle (6) if it is represented individually at least with its vehicle front in the central image area (1.2).

## Revendications

1. Procédé de génération d'un document d'image dans lequel un véhicule (6) mesuré par un dispositif de radar (5) peut être identifié,
dans lequel un éventail de radar (5.2) avec des rayons marginaux (5.3) est dirigé sur une voie de circulation (7) au moyen d'un dispositif de radar (5), la voie de circulation (7) étant située dans le champ d'objet d'une caméra (4), de sorte que des véhicules passant par l'éventail de radar (5.2) sont mesurés,
des valeurs de distance sont dérivées à partir des valeurs de mesure obtenues par la mesure,
un enregistrement d'image (1) est généré au moyen de la caméra (4) à un moment de déclenchement spécifique,
un marquage (3) comprenant au moins une ligne de marquage (3.1, 3.2) est généré en incluant au moins une valeur de distance dérivée,
une représentation (3') du marquage (3) dans le plan d'image de la caméra (4) est calculée et
l'enregistrement d'image (1) et la représentation (3') calculée sont combinés pour former un document d'image en projetant la représentation (3') sur l'enregistrement d'image (1) d'une manière visible, pour identifier le véhicule mesuré (6) dépendant à la position relative des véhicules représentés dans l'enregistrement d'image (1) par rapport à la représentation (3'), **caractérisé en ce que**
l'au moins une ligne de marquage (3.1, 3.2) est calculée de telle façon qu'elle forme un arc, avec un rayon (rᵢ, rₐ), projeté sur la voie de circulation (7), le point central (3.3) dudit arc étant positionné dans le point de base du dispositif de radar (5),
une valeur de distance représentative étant déterminée des valeurs de distance dérivées, ladite valeur de distance représentative étant représentative de la distance du véhicule mesuré (6) au moment de déclenchement, et
le rayon (rᵢ, rₐ) étant dérivé à partir de la valeur de distance représentative.

2. Procédé selon la revendication 1, **caractérisé en ce qu'**une valeur limite de distance inférieure est calculée à partir de la valeur de distance représentative en prédéfinissant un écart de mesure, ladite valeur limite de distance inférieure étant utilisée en tant que valeur pour un rayon intérieur (rᵢ) pour calculer une ligne de marquage intérieure (3.1), étant une première ligne de marquage, avec le résultat que la représentation (3') du marquage (3) divise l'enregistrement d'image (1) en une zone d'image avant (1.1) et une zone d'image arrière (1.3) et un véhicule est identifié en tant que véhicule mesuré (6) s'il est représenté individuellement et complètement dans la zone d'image arrière (1.3).

3. Procédé selon la revendication 2, **caractérisé en ce qu'**une valeur limite de distance supérieure est calculée à partir de la valeur de distance représentative en prédéfinissant un écart de mesure, ladite valeur limite de distance supérieure étant utilisée en tant que valeur pour un rayon extérieur (rₐ) pour calculer une ligne de marquage extérieure (3.2), étant une deuxième ligne de marquage, avec le résultat que la représentation (3') du marquage (3) divise l'enregistrement d'image (1) en une zone d'image avant (1.1), une zone d'image centrale (1.2) et une zone d'image arrière (1.3) et un véhicule est identifié en tant que véhicule mesuré (6) qui est représenté individuellement au moins avec son avant de véhicule dans la zone d'image centrale (1.2).

4. Procédé selon la revendication 2, **caractérisé en ce que** les rayons marginaux (5.3) limitent la ligne de marquage intérieure (3.1), avec le résultat que la zone d'image arrière (1.3) est délimitée latéralement à une zone de la voie de circulation (7) représentée sur laquelle l'éventail de radar (5.2) est dirigé.

5. Procédé selon la revendication 3, **caractérisé en ce que** les rayons marginaux (5.3) limitent la ligne de marquage intérieure et extérieure (3.1, 3.2), avec le résultat que la zone d'image centrale (1.2) est délimitée latéralement à une zone de la voie de circulation (7) représentée sur laquelle l'éventail de radar (5.2) est dirigé.

6. Procédé selon la revendication 2 ou 4, **caractérisé en ce que** la zone d'image avant (1.1) est mise en relief.

7. Procédé selon la revendication 3 ou 5, **caractérisé en ce que** les zones d'image avoisinant la zone d'image centrale (1.2) sont mises en relief.

8. Procédé selon la revendication 1, **caractérisé en ce qu'**une valeur de vitesse confirmée est aussi dérivée à partir des valeurs de mesure, ladite valeur de vitesse confirmée étant comparée à une valeur de vitesse maximale prédéterminée, et le moment de déclenchement spécifique étant atteint quand la valeur de vitesse maximale est dépassée.

9. Document d'image, dans lequel un véhicule (6) mesuré par un dispositif de radar (5) et roulant sur une voie de circulation (7) peut être identifié, le document d'image étant généré par un procédé selon une des revendications 1 à 8, avec un enregistrement d'image (1) et une représentation (3') d'un marquage (3) superposant l'enregistrement d'image (1), le marquage (3) comprenant au moins une ligne de marquage (3.1, 3.2) formant un arc projeté sur la voie de circulation (7).

10. Document d'image selon la revendication 9, **caractérisé en ce que** le marquage (3) est une ligne de marquage intérieure (3.1) formant un arc projeté sur la voie de circulation (7) de telle façon que la représentation (3') du marquage (3) divise l'enregistrement d'image (1) en une zone d'image avant (1.1) et une zone d'image arrière (1.3).

11. Document d'image selon la revendication 9, **caractérisé en ce que** le marquage (3) est une ligne de marquage intérieure (3.1) et une ligne de marquage extérieure (3.2), chacune formant un arc projeté sur la voie de circulation (7), les points centraux (3.3) des arcs coïncidant, de telle façon que la représentation (3') du marquage (3) divise l'enregistrement d'image (1) en une zone d'image avant (1.1), une zone d'image centrale (1.2) et une zone d'image arrière (1.3).

12. Document d'image selon la revendication 9, **caractérisé en ce que** le document d'image comprend une barre de données (2) dans lequel des données pertinentes pour l'évaluation et l'usage du document d'image sont affichées.

13. Document d'image selon la revendication 9, **caractérisé en ce que** le marquage (3) est omis où il est situé sur un véhicule représenté, pour éviter qu'une véhicule représenté est couvert par les représentations (3') du marquage (3).

14. Procédé d'évaluation d'un document d'image selon la revendication 10, **caractérisé en ce qu'**un véhicule représenté dans l'enregistrement d'image (1) est identifié en tant que véhicule mesuré (6) s'il est représenté individuellement et complètement dans la zone d'image arrière (1.3).

15. Procédé d'évaluation d'un document d'image selon la revendication 11, **caractérisé en ce qu'**un véhicule représenté dans l'enregistrement d'image (1) est identifié en tant que véhicule mesuré (6) s'il est représenté individuellement au moins avec son avant de véhicule dans la zone d'image centrale (1.2).
